# EUROPEAN PATENT APPLICATION

(11) **EP 3 373 683 A1**
(43) Date of publication of application: **12.09.2018**
(21) Application number: 15909458.0
(22) Date of filing: 30.11.2015
(51) Int. Cl.: H04W 72/10

(54) **SERVICE DATA PACKET PROCESSING METHOD AND DEVICE**

(71) Applicant: Huawei Technologies Co., Ltd., Longgang District Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN); HUANG, Min, Shenzhen Guangdong 518129 (CN); LIU, Huiping, Shenzhen Guangdong 518129 (CN)
(74) Representative: Epping - Hermann - Fischer
(86) International application number: PCT/CN2015/095977
(87) International publication number: WO 2017/091941

(57) **Abstract**

Embodiments of the present invention relate to the communications field, and provide a service data packet processing method and apparatus. The method includes: receiving service auxiliary indication information from a first device, where the service auxiliary indication information is used to indicate a processing requirement of the first device for a service data packet, and the first device is at least one of a terminal, a server, or a routing node in a service data packet transmission process; determining a processing priority of the service data packet based on the service auxiliary indication information; and processing the service data packet based on the processing priority. The apparatus includes a receiving unit and a processing unit. According to the present invention, processing requirements for a service in different transmission phases can be met.

## Description

### TECHNICAL FIELD

The present invention relates to the communications field, and in particular, to a service data packet processing method and apparatus.

### BACKGROUND

In a mobile communications system, a service data packet of a service may be transmitted between a terminal and a server, and the service data packet transmitted between the terminal and the server usually passes through a network side device such as a base station or a gateway. When receiving the service data packet, the network side device needs to process the service data packet. For example, the network side device may schedule the service data packet, and send the scheduled service data packet to the terminal or the server.

It can be learned based on research that some services have different processing requirements for the network side device in different transmission phases. For example, some services have different requirements for a transmission delay in different transmission phases. A video service is used as an example. It can be learned based on research on the video service that delay requirements for each video fragment are different in an initial video loading process and a playback process. Usually, a relatively short time is required in the initial video loading process, to reduce a waiting time of a user; but when there is data in a buffer of a player in the playback process, a scheduling delay may be longer.

During implementation of the present invention, the inventor finds that the prior art has at least the following problem:

Currently, when a network side device processes a service data packet, processing requirements for a service in different transmission phases cannot be met.

### SUMMARY

To meet processing requirements for a service in different transmission phases, embodiments of the present invention provide a service data packet processing method and apparatus. The technical solutions are as follows:

According to a first aspect, a service data packet processing method is provided, and the method includes:
receiving service auxiliary indication information from a first device, where the service auxiliary indication information is used to indicate a processing requirement of the first device for a service data packet, and the first device is at least one of a terminal, a server, or a routing node in a service data packet transmission process;
determining a processing priority of the service data packet based on the service auxiliary indication information; and
processing the service data packet based on the processing priority.

The processing priority of the service data packet is determined based on the service auxiliary indication information of the first device, and service data is processed based on the processing priority, so that processing requirements for a service in different service transmission phases are met.

With reference to the first aspect, in a first possible implementation of the first aspect,
the service auxiliary indication information is scheduling indication information, and is used to instruct a network side device to quickly schedule the service data packet; or
the service auxiliary indication information is a scheduling level indication, and is used to indicate a scheduling priority of the service data packet to a network side device; or
the service auxiliary indication information is a type of the service data packet; or
the service auxiliary indication information is a delay requirement of the service data packet, and is used to indicate a scheduling delay of the service data packet to a network side device; or
the service auxiliary indication information is the processing priority of the service data packet, and is used to indicate the priority of processing the service data packet by a network side device.

With reference to the first aspect or the first possible implementation of the first aspect, in a second possible implementation of the first aspect,
the service auxiliary indication information includes uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

With reference to the first aspect or the first possible implementation of the first aspect, in a third possible implementation of the first aspect, the method further includes:
receiving direction information from the first device, where the direction information is used to indicate whether the service auxiliary indication information is uplink service auxiliary information or downlink service auxiliary information.

With reference to any one of the first aspect, or the first to the third possible implementations of the first aspect, in a fourth possible implementation of the first aspect,
the method further includes:
obtaining valid duration; and
the determining a processing priority of the service data packet based on the service auxiliary indication information includes:
   determining, within the valid duration after the service auxiliary indication information is received, the processing priority of the service data packet based on the service auxiliary indication information.

The network side device may be notified of a time validity range of the service auxiliary indication information by using the valid duration, so that the network side device processes the service data packet based on the processing priority within the time validity range.

With reference to any one of the first aspect, or the first to the fourth possible implementations of the first aspect, in a fifth possible implementation of the first aspect,
when the first device is the terminal, the receiving service auxiliary indication information from a first device includes:
receiving radio resource control (RRC) signaling from the terminal, where the RRC signaling carries the service auxiliary indication information; or
receiving an uplink service data packet from the terminal, where a packet header of the uplink service data packet carriers the service auxiliary indication information, or a control information element in a packet header of the uplink service data packet carriers the service auxiliary indication information; or
receiving the service auxiliary indication information that is from the terminal by using a preset transmission resource.

With reference to any one of the first aspect, or the first to the fourth possible implementations of the first aspect, in a sixth possible implementation of the first aspect,
when the first device is the server or the routing node in a data transmission process, the receiving service auxiliary indication information from a first device includes:
receiving a service data packet from the server or the routing node, where a packet header of the service data packet carriers the service auxiliary indication information.

According to a second aspect, a service data packet processing apparatus is provided, and the apparatus includes:
a receiving unit, configured to receive service auxiliary indication information from a first device, where the service auxiliary indication information is used to indicate a processing requirement of the first device for a service data packet, and the first device is at least one of a terminal, a server, or a routing node in a service data packet transmission process; and
a processing unit, configured to: determine a processing priority of the service data packet based on the service auxiliary indication information, and process the service data packet based on the processing priority.

The processing priority of the service data packet is determined based on the service auxiliary indication information of the first device, and service data is processed based on the processing priority, so that processing requirements for a service in different service transmission phases are met.

With reference to the second aspect, in a first possible implementation of the second aspect,
the service auxiliary indication information is scheduling indication information, and is used to instruct the apparatus to quickly schedule the service data packet; or
the service auxiliary indication information is a scheduling level indication, and is used to indicate a scheduling priority of the service data packet to the apparatus; or
the service auxiliary indication information is a type of the service data packet; or
the service auxiliary indication information is a delay requirement of the service data packet, and is used to indicate a scheduling delay of the service data packet to the apparatus; or
the service auxiliary indication information is the processing priority of the service data packet, and is used to indicate the priority of processing the service data packet by the apparatus.

With reference to the second aspect or the first possible implementation of the second aspect, in a second possible implementation of the second aspect,
the service auxiliary indication information includes uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

With reference to the second aspect or the first possible implementation of the second aspect, in a third possible implementation of the second aspect,
the receiving unit is further configured to receive direction information from the first device, where the direction information is used to indicate whether the service auxiliary indication information is uplink service auxiliary information or downlink service auxiliary information.

With reference to any one of the second aspect, or the first to the third possible implementations of the second aspect, in a fourth possible implementation of the second aspect,
the processing unit is configured to: obtain valid duration; and determine, within the valid duration after the service auxiliary indication information is received, the processing priority of the service data packet based on the service auxiliary indication information.

The apparatus may be notified of a time validity range of the service auxiliary indication information by using the valid duration, so that the apparatus processes the service data packet based on the processing priority within the time validity range.

With reference to any one of the second aspect, or the first to the fourth possible implementations of the second aspect, in a fifth possible implementation of the second aspect, when the first device is the terminal,
the receiving unit is configured to: receive radio resource control (RRC) signaling from the terminal, where the RRC signaling carries the service auxiliary indication information; or receive an uplink service data packet from the terminal, where a packet header of the uplink service data packet carriers the service auxiliary indication information, or a control information element in a packet header of the uplink service data packet carriers the service auxiliary indication information; or receive the service auxiliary indication information from the terminal by using a preset transmission resource.

With reference to any one of the second aspect, or the first to the fourth possible implementations of the second aspect, in a sixth possible implementation of the second aspect,
when the first device is the server or the routing node in a data transmission process, the receiving unit is configured to receive a service data packet from the server or the routing node, where a packet header of the service data packet carriers the service auxiliary indication information.

According to a third aspect, a service data packet processing apparatus is provided, and the apparatus includes:
a receiver, configured to receive service auxiliary indication information from a first device, where the service auxiliary indication information is used to indicate a processing requirement of the first device for a service data packet, and the first device is at least one of a terminal, a server, or a routing node in a service data packet transmission process; and
a processor, configured to: determine a processing priority of the service data packet based on the service auxiliary indication information, and process the service data packet based on the processing priority.

The processing priority of the service data packet is determined based on the service auxiliary indication information of the first device, and service data is processed based on the processing priority, so that processing requirements for a service in different service transmission phases are met.

With reference to the third aspect, in a first possible implementation of the third aspect,
the service auxiliary indication information is scheduling indication information, and is used to instruct the apparatus to quickly schedule the service data packet; or
the service auxiliary indication information is a scheduling level indication, and is used to indicate a scheduling priority of the service data packet to the apparatus; or
the service auxiliary indication information is a type of the service data packet; or
the service auxiliary indication information is a delay requirement of the service data packet, and is used to indicate a scheduling delay of the service data packet to the apparatus; or
the service auxiliary indication information is the processing priority of the service data packet, and is used to indicate the priority of processing the service data packet by the apparatus.

With reference to the third aspect or the first possible implementation of the third aspect, in a second possible implementation of the third aspect,
the service auxiliary indication information includes uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

With reference to the third aspect or the first possible implementation of the third aspect, in a third possible implementation of the third aspect,
the receiver is further configured to receive direction information from the first device, where the direction information is used to indicate whether the service auxiliary indication information is uplink service auxiliary information or downlink service auxiliary information.

With reference to any one of the third aspect, or the first to the third possible implementations of the third aspect, in a fourth possible implementation of the third aspect,
the processor is configured to: obtain valid duration; and determine, within the valid duration after the service auxiliary indication information is received, the processing priority of the service data packet based on the service auxiliary indication information.

The apparatus may be notified of a time validity range of the service auxiliary indication information by using the valid duration, so that the apparatus processes the service data packet based on the processing priority within the time validity range.

With reference to any one of the third aspect, or the first to the fourth possible implementations of the third aspect, in a fifth possible implementation of the third aspect, when the first device is the terminal,
the receiver is configured to: receive radio resource control (RRC) signaling from the terminal, where the RRC signaling carries the service auxiliary indication information; or receive an uplink service data packet from the terminal, where a packet header of the uplink service data packet carriers the service auxiliary indication information, or a control information element in a packet header of the uplink service data packet carriers the service auxiliary indication information; or receive the service auxiliary indication information that is from the terminal by using a preset transmission resource.

With reference to any one of the third aspect, or the first to the fourth possible implementations of the third aspect, in a sixth possible implementation of the third aspect,
when the first device is the server or the routing node in a data transmission process, the receiver is configured to receive a service data packet from the server or the routing node, where a packet header of the service data packet carriers the service auxiliary indication information.

According to a fourth aspect, a service data packet processing method is provided, and the method includes:
generating service auxiliary indication information based on service reference information of a first device, where the service auxiliary indication information is used to indicate a processing requirement of the first device for a service data packet, and the first device is at least one of a terminal, a server, or a routing node in a service data packet transmission process; and
sending the service auxiliary indication information to a network side device, where the service auxiliary indication information is used by the network side device to determine a processing priority of the service data packet; and processing the service data packet based on the processing priority.

With reference to the fourth aspect, in a first possible implementation of the fourth aspect, when the first device is the terminal, the sending the service auxiliary indication information to a network side device includes:
sending radio resource control (RRC) signaling to the network side device, where the RRC signaling carries the service auxiliary indication information; or
sending an uplink service data packet to the network side device, where a packet header of the uplink service data packet carriers the service auxiliary indication information, or a control information element in a packet header of the uplink service data packet carriers the service auxiliary indication information; or
sending the service auxiliary indication information to the network side device by using a preset transmission resource.

With reference to the fourth aspect, in a second possible implementation of the fourth aspect, when the first device is the server or the routing node in a data transmission process, the sending the service auxiliary indication information to a network side device includes:
sending a service data packet to the network side device, where a packet header of the service data packet carriers the service auxiliary indication information.

According to a fifth aspect, a service data packet processing apparatus is provided, and the apparatus includes:
a processing unit, configured to generate service auxiliary indication information based on service reference information of a first device, where the service auxiliary indication information is used to indicate a processing requirement of the first device for a service data packet, and the first device is at least one of a terminal, a server, or a routing node in a service data packet transmission process; and
a sending unit, configured to: send the service auxiliary indication information to a network side device, where the service auxiliary indication information is used by the network side device to determine a processing priority of the service data packet; and process the service data packet based on the processing priority.

With reference to the fifth aspect, in a first possible implementation of the fifth aspect, when the apparatus is the terminal,
the sending unit is configured to: send radio resource control (RRC) signaling to the network side device, where the RRC signaling carries the service auxiliary indication information; or send an uplink service data packet to the network side device, where a packet header of the uplink service data packet carriers the service auxiliary indication information, or a control information element in a packet header of the uplink service data packet carriers the service auxiliary indication information; or send the service auxiliary indication information to the network side device by using a preset transmission resource.

With reference to the fifth aspect, in a second possible implementation of the fifth aspect, when the apparatus is the server or the routing node in a data transmission process,
the sending unit is configured to send a service data packet to the network side device, where a packet header of the service data packet carriers the service auxiliary indication information.

With reference to the fifth aspect, in a third possible implementation of the fifth aspect, the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

With reference to the fifth aspect, in a fourth possible implementation of the fifth aspect, the service auxiliary indication information includes uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

With reference to the fifth aspect, in a fifth possible implementation of the fifth aspect, the sending unit is further configured to send direction information to the network side device, where the direction information is used to indicate whether the service auxiliary indication information is uplink service auxiliary information or downlink service auxiliary information.

According to a sixth aspect, a service data packet processing apparatus is provided, and the apparatus includes:
a processor, configured to generate service auxiliary indication information based on service reference information of a first device, where the service auxiliary indication information is used to indicate a processing requirement of the first device for a service data packet, and the first device is at least one of a terminal, a server, or a routing node in a service data packet transmission process; and
a transmitter, configured to: send the service auxiliary indication information to a network side device, where the service auxiliary indication information is used by the network side device to determine a processing priority of the service data packet; and process the service data packet based on the processing priority.

With reference to the sixth aspect, in a first possible implementation of the sixth aspect, when the first device is the terminal,
the transmitter is configured to: send radio resource control (RRC) signaling to the network side device, where the RRC signaling carries the service auxiliary indication information; or send an uplink service data packet to the network side device, where a packet header of the uplink service data packet carriers the service auxiliary indication information, or a control information element in a packet header of the uplink service data packet carriers the service auxiliary indication information; or send the service auxiliary indication information to the network side device by using a preset transmission resource.

With reference to the sixth aspect, in a second possible implementation of the sixth aspect, when the first device is the server or the routing node in a data transmission process,
the transmitter is configured to send a service data packet to the network side device, where a packet header of the service data packet carriers the service auxiliary indication information.

With reference to the sixth aspect, in a third possible implementation of the sixth aspect, the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

With reference to the sixth aspect, in a fourth possible implementation of the sixth aspect, the service auxiliary indication information includes uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

With reference to the sixth aspect, in a fifth possible implementation of the sixth aspect, the sending unit is further configured to send direction information to the network side device, where the direction information is used to indicate whether the service auxiliary indication information is uplink service auxiliary information or downlink service auxiliary information.

Beneficial effects of the technical solutions provided in the embodiments of the present invention are as follows:

In the embodiments of the present invention, the processing priority of the service data packet is determined based on the service auxiliary indication information of the first device, and service data is processed based on the processing priority, so that processing requirements for a service in different service transmission phases are met.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of a network architecture according to an embodiment of the present invention;
FIG. 2 is a schematic structural diagram of a network side device according to an embodiment of the present invention;
FIG. 3 is a flowchart of a service data packet processing method according to an embodiment of the present invention;
FIG. 4 is a flowchart of another service data packet processing method according to an embodiment of the present invention;
FIG. 5 is a schematic structural diagram of a service data packet processing apparatus according to an embodiment of the present invention;
FIG. 6 is a schematic structural diagram of another service data packet processing apparatus according to an embodiment of the present invention; and
FIG. 7 is a schematic structural diagram of another service data packet processing apparatus according to an embodiment of the present invention.

### DESCRIPTION OF EMBODIMENTS

To make the objectives, technical solutions, and advantages of the present invention clearer, the following further describes the implementations of the present invention in detail with reference to the accompanying drawings.

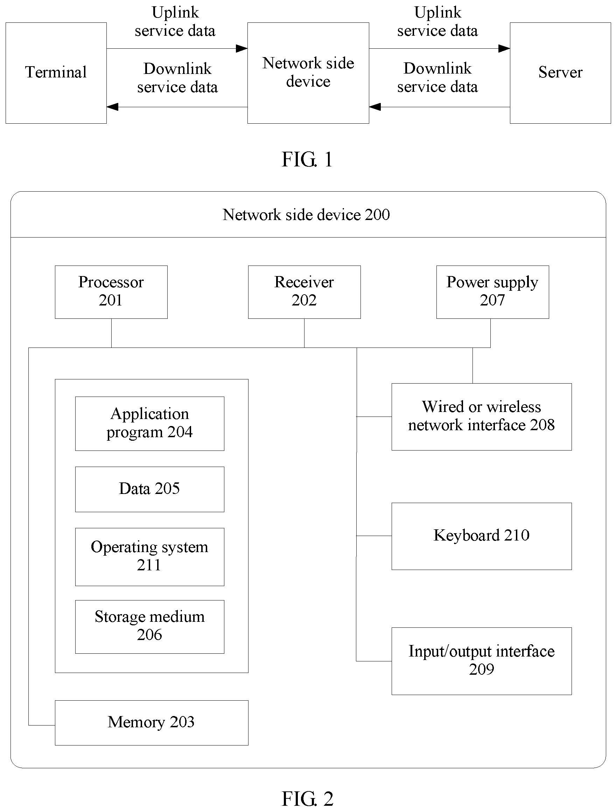

Referring to FIG. 1, FIG. 1 shows a network architecture of a mobile communications system applied in embodiments of the present invention. The network architecture includes a terminal, a network side device, and a server. A service data packet may be sent between the terminal and the server. The network side device is a device through which the service data packet sent between the terminal and the server passes. For example, the service data packet sent between the terminal and the server may pass through nodes such as a base station, an SGW (Serving Gateway, serving gateway), and a PGW (PDN (Packet Data Network, packet data network) gateway, PDN gateway). These nodes are network side devices. It should be noted that in an actual data transmission process, a data packet further passes through a router and the like in an IP (Internet Protocol, internet protocol) network during transmission. Details are not described herein.

In the embodiments of the present invention, for ease of description, a device that may send service auxiliary indication information to the network side device is referred to as a first device, and the service auxiliary indication information is used to indicate a processing requirement for a service data packet. The first device is at least one of the following entities: a terminal, a server, or a routing node in a service data packet transmission process.

The network side device receives the service auxiliary indication information, determines a processing priority of the service data packet based on the service auxiliary indication information, and processes the service data packet based on the processing priority. For a specific implementation process, refer to content of subsequent corresponding embodiments. Details are not described herein.

It should be noted that processing and/or a processing requirement in this patent include/includes but are/is not limited to: a size of an allocated transmission resource, a delay requirement in data packet transmission, a scheduling priority request, a data packet discard instruction, a sequence of data packets in a relay node, and the like.

Referring to FIG. 2, the embodiments of the present invention further provide a network side device 200. The network side device 200 may greatly vary due to different configurations or different performance, and may include one or more processors 201, receivers 202, and memories 203, and one or more storage media 206 (for example, one or more mass storage devices) for storing application programs 204 or data 205. The memory 203 and the storage medium 206 may be transient storage or persistent storage. A program stored in the storage medium 206 may include one or more modules (which are not shown in the diagram), and each module may include a series of instruction operations performed on the network side device 200. Furthermore, the processor 201 may be configured to: communicate with the storage medium 206, and perform, on the network side device 200, a series of instruction operations in the storage medium 206.

The network side device 200 may further include one or more power supplies 207, one or more wired or wireless network interfaces 208, one or more input/output interfaces 209, one or more keyboards 210, and/or one or more operating systems 211, such as Windows ServerTM, Mac OS XTM, UnixTM, LinuxTM, or FreeBSDTM.

In the present invention, the processor 201 and the receiver 202 of the network side device 200 have the following functions:

The receiver 202 is configured to receive service auxiliary indication information from a first device. The service auxiliary indication information is used to indicate a processing requirement of the first device for a service data packet, and the first device is at least one of a terminal, a server, or a routing node in a service data packet transmission process.

The processor 201 is configured to: determine a processing priority of the service data packet based on the service auxiliary indication information, and process the service data packet based on the processing priority.

Optionally, the service auxiliary indication information is scheduling indication information, and is used to instruct the network side device 200 to quickly schedule the service data packet; or
the service auxiliary indication information is a scheduling level indication, and is used to indicate a scheduling priority of the service data packet to the network side device 200; or
the service auxiliary indication information is a type of the service data packet; or
the service auxiliary indication information is a delay requirement of the service data packet, and is used to indicate a scheduling delay of the service data packet to the network side device 200; or
the service auxiliary indication information is the processing priority of the service data packet, and is used to indicate the priority of processing the service data packet by the network side device 200.

Optionally, the service auxiliary indication information includes uplink service auxiliary indication information and/or downlink service auxiliary indication information. The uplink service auxiliary indication information is used to indicate a processing requirement for an uplink service data packet, and the downlink service auxiliary indication information is used to indicate a processing requirement for a downlink service data packet.

Optionally, the receiver 202 is further configured to receive direction information from the first device. The direction information is used to indicate whether the service auxiliary indication information is uplink service auxiliary information or downlink service auxiliary information.

Optionally, the processor 201 is configured to: obtain valid duration, and determine, within the valid duration after the service auxiliary indication information is received, the processing priority of the service data packet based on the service auxiliary indication information.

Optionally, when the first device is the terminal, the receiver 202 is configured to: receive radio resource control (RRC) signaling from the terminal, where the RRC signaling carries the service auxiliary indication information; or receive an uplink service data packet from the terminal, where a packet header of the uplink service data packet carriers the service auxiliary indication information, or a control information element in a packet header of the uplink service data packet carriers the service auxiliary indication information; or receive the service auxiliary indication information that is from the terminal by using a preset transmission resource.

Optionally, when the first device is the server or the routing node in a data transmission process, the receiver 202 is configured to receive a service data packet from the server or the routing node. A packet header of the service data packet carriers the service auxiliary indication information, or the channel associated signaling carries the service indication information.

An embodiment of the present invention provides a service data packet processing method. In the method, a first device sends service auxiliary indication information to a network side device. The service auxiliary indication information is used to indicate a processing requirement for a service data packet. The service data packet includes an uplink service data packet and/or a downlink service data packet. The uplink service data packet is a service data packet that is sent by a terminal to a server or a network side device, and the downlink service data packet is a service data packet that is sent by the server or the network side device to the terminal.

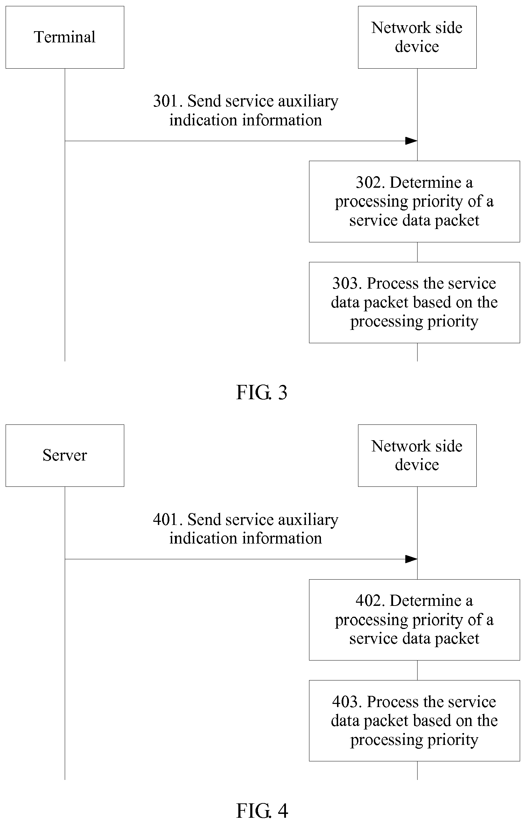

When receiving the service auxiliary indication information from the first device, the network side device may process the service data packet based on the service auxiliary indication information. Referring to FIG. 3, an example in which the first device is the terminal and a processing operation performed on the service data packet is specifically a scheduling operation is used for description. A specific process of the method is as follows.

Step 301: A terminal sends service auxiliary indication information to a network side device, where the service auxiliary indication information is used to indicate a scheduling requirement of the terminal for a service data packet.

In this embodiment, the service auxiliary indication information may be used to indicate a scheduling requirement for an uplink service data packet or a scheduling requirement for a downlink service data packet. Alternatively, the service auxiliary indication information may be uplink service auxiliary indication information, and the uplink service auxiliary indication information is used to indicate the scheduling requirement for the uplink service data packet. Alternatively, the service auxiliary indication information may be downlink service auxiliary indication information, and the downlink service auxiliary indication information is used to indicate the scheduling requirement for the downlink service data packet. The scheduling requirement herein may be scheduling existing when a service data packet passes through an air interface, or scheduling existing when the network side device sends a service data packet to a next routing node.

Optionally, in this embodiment, the service auxiliary indication information may have the following forms.

In a first case, the service auxiliary indication information is scheduling indication information, and is used to instruct the network side device to quickly schedule the service data packet, or is used to instruct the network side device to decelerate scheduling of the service data packet.

For example, in this embodiment, the service auxiliary indication information may be one bit. A bit 1 is used to indicate that the scheduling of the service data packet needs to be accelerated, and a bit 0 is used to indicate that the scheduling of the service data packet needs to be decelerated or does not need to be accelerated. Alternatively, a bit 0 is used to indicate that the scheduling of the service data packet needs to be accelerated, and a bit 1 is used to indicate that the scheduling of the service data packet needs to be decelerated or does not need to be accelerated. Alternatively, a bit 1 is used to indicate that the scheduling of the service data packet needs to be accelerated, and that no service auxiliary indication information is sent indicates that the scheduling of the service data packet does not need to be accelerated. Alternatively, a bit 1 is used to indicate that the scheduling of the service data packet needs to be decelerated, and that no service auxiliary indication information is sent indicates that the scheduling of the service data packet does not need to be decelerated.

It should be noted that the service auxiliary indication information may be for one service or one bearer of the terminal, or may be for some services or some bearers of the terminal, or may be for all services or all bearers of the terminal. This is not limited herein. When the auxiliary indication information is for one or some services/bearers, the terminal further needs to indicate the service or the bearer corresponding to the service auxiliary indication information. For example, the terminal needs to indicate an identifier of a radio bearer corresponding to the service data packet or address information (an IP address, a TCP port number, and the like) of the service data packet. The information may be sent together with the service auxiliary information, or may be sent, before the service auxiliary indication information is sent, through negotiation performed between the terminal and the network side device.

In a second case, the service auxiliary indication information is a scheduling level indication, and is used to indicate a scheduling priority of the service data packet to the network side device.

Different scheduling levels represent scheduling priorities of service data packets. Preferably, the scheduling levels may be defined based on different requirements of different services or different service data packets for a delay.

It should be noted that the scheduling level may be obtained by performing sorting by the terminal based on services that are currently performed by the terminal, and reflect scheduling requirements of the terminal for different service data packets of the performed services; or the network side device and the terminal predefine different priorities corresponding to different services or different delay requirements or different data packet types, and the terminal obtains, based on the predefined priority and a currently performed service or a type of a sent service data packet, a priority that needs to be reported. For example, a scheduling level of a service data packet may specifically include four levels that are respectively a first level, a second level, a third level, and a fourth level.

The first level indicates that a requirement for a sending delay is the highest. For example, for a first video fragment packet, the terminal requires the network side device to preferably schedule the service data packet of the terminal after receiving the service data packet.

The second level indicates that a requirement for a sending delay is lower than that of the first level. For example, for a fragment packet in a video playback phase, the terminal requires the network side device to schedule the service data packet of the terminal within a first time after receiving the service data packet. For example, the first time may be 5 ms, 10 ms, 15 ms, or the like. For example, when the first time is 10 ms, the second level indicates that the terminal requires the network side device to schedule the service data packet of the terminal within 10 ms after receiving the service data packet.

The third level indicates that a sending delay may be greater than that of the second level. For example, for a data packet downloaded in the background, the terminal requires the network side device to schedule the service data packet of the terminal within a second time after receiving the service data packet. The second time is greater than the preset first time. For example, the preset second time may be 30 ms, 50 ms, Is, or the like. For example, when the second time is Is, the third level indicates that the terminal requires the network side device to schedule the service data packet of the terminal within Is after receiving the service data packet.

The fourth level indicates that a sending delay may be greater than that of the third level. For example, for meter reading information, the terminal requires the network side device to determine by itself a time for scheduling a service data packet of the terminal.

In this embodiment, two bits may be used to represent each of the four levels, for example, a bit 11 is used to represent the first level, a bit 10 is used to represent the second level, a bit 01 is used to represent the third level, and a bit 00 is used to represent the fourth level.

In a third case, the service auxiliary indication information is used to indicate a current play state of the terminal or a type of the service data packet to the network side device.

The play state of the terminal or the type of the service data packet may reflect the scheduling requirement of the terminal for the downlink service data packet. For example, a play state of playing downlink service data by the terminal may include an initial buffering phase, a playback phase, a frame freezing phase, and the like. The play state may further include: playing of data in a buffer is to be completed, data in a buffer starts to be played, or the terminal is in a rebuffering phase, a user performs a dragging operation, a user performs a pause operation, a program is executed in the background, and the like. The initial buffering phase, that playing of data in a buffer is to be completed, and that the terminal is in a rebuffering phase reflect that the terminal urgently needs the network side device to schedule the downlink service data packet of the terminal. That data in a buffer starts to be played reflects that a time requirement strength in which the terminal needs the network side device to schedule the downlink service data packet of the terminal is weaker than those of the foregoing three cases. For a video service, the type of the service data packet may be a data packet in an initial buffering phase, a data packet in a rebuffering phase, a data packet in a playback phase, or the like. The type of the service data packet may also reflect a play state of a player. Further, the type of the service data packet may be a service type, for example, a video service, a game, a voice, background, or a streaming service.

Alternatively, the service auxiliary indication information may be a delay requirement of the service data packet, and is used to indicate a scheduling delay of the service data packet to the network side device; or may be a processing priority of the service data packet, and is used to indicate the priority of processing the service data packet by the network side device.

Optionally, in this step, the terminal may send the service auxiliary indication information to the network side device in the following three manners.
(1). The terminal sends RRC (Radio Resource Control, radio resource control) signaling to the network side device, where the RRC signaling carries the service auxiliary indication information.
(2). The terminal sends an uplink service data packet to the network side device, where a packet header of the uplink service data packet carriers the service auxiliary indication information, or a control information element in a packet header of the uplink service data packet carriers the service auxiliary indication information. For example, the service auxiliary indication information is carried in a MAC (Medium Access Control, medium access control) packet header or a MAC CE (MAC control element, MAC control signaling).
(3). The terminal sends the service auxiliary indication information to the network side device by using a preset transmission resource. For example, the auxiliary indication information is sent by using a dedicated uplink channel or a fixed time-frequency resource on a dedicated PUSCH (Physical Uplink Shared Channel, physical uplink shared channel) or PUCCH (Physical Uplink Control Channel, physical uplink control channel).

Optionally, the terminal may further send direction information to the network side device. The direction information is used to indicate whether the service auxiliary indication information is uplink service auxiliary indication information or downlink service auxiliary indication information.

The terminal needs to obtain the service auxiliary indication information before sending the service auxiliary indication information. Preferably, an application layer or an architecture layer of the terminal generates the service auxiliary indication information, and sends the service auxiliary indication information to a bottom layer of the terminal, and the bottom layer of the terminal sends the service auxiliary indication information to the network side device. Alternatively, an application layer or an architecture layer of the terminal generates service reference information, a bottom layer of the terminal generates the service auxiliary indication information based on the service reference information provided by the application layer or the architecture layer of the terminal, and the bottom layer of the terminal sends the service auxiliary indication information to the network side device. For example, the application layer or the architecture layer indicates, to the bottom layer, that a first fragment packet is being scheduled and needs to be quickly sent. The bottom layer sets the service auxiliary indication information to 1, to instruct the network side device to accelerate scheduling.

Optionally, the first device may further send valid duration to the network side device. The valid duration is a valid time for the service auxiliary information sent by the first device. In other words, the service auxiliary information remains valid in the time period.

Step 302: The network side device receives the service auxiliary indication information, and determines a processing priority of the service data packet based on the service auxiliary indication information.

In this embodiment, the network side device may be any device through which the service data packet of the terminal passes, for example, may be a base station, a RAN (Radio Access Network, radio access network), or another relay device such as a relay terminal.

Optionally, the network side device may further receive the direction information from the terminal, to determine whether the auxiliary indication information is for an uplink data packet or for a downlink data packet.

The determining a processing priority of the service data packet based on the service auxiliary indication information includes: determining the scheduling priority of the service data packet based on the service auxiliary indication information; and/or determining, based on the service auxiliary indication information, a quantity of transmission resources that are allocated to the terminal for transmitting a service data packet. The priority may be a time or a sequence of scheduling the service data packet.

Optionally, if the service auxiliary indication information indicates the scheduling requirement of the terminal for the uplink service data packet, or the service auxiliary indication information is the uplink service auxiliary indication information, after the network side device receives the service auxiliary indication information, the network side device determines, based on the service auxiliary indication information, a time or a sequence of scheduling the uplink service data packet of the terminal, and may further determine a transmission resource for scheduling the uplink service data packet of the terminal. Optionally, the network side device may further determine a processing priority of the uplink service data packet based on the auxiliary indication information, and send priority information to at least one routing node through which the data packet needs to pass in a transmission process.

In this step, if the service auxiliary indication information is the scheduling indication information, the network side device determines the processing priority of the service data packet based on the scheduling indication information. For example, if the scheduling indication information is used to instruct the network side device to quickly schedule the service data packet, it is determined that the processing priority of the service data packet is relatively high. If the scheduling indication information is used to instruct the network side device to decelerate the scheduling of the service data packet, it is determined that the processing priority of the service data packet is relatively low.

If the service auxiliary indication information is the scheduling level indication, the network side device determines the processing priority of the service data packet based on the scheduling level indication. For example, the scheduling level indication indicates the first level, the second level, the third level, or the fourth level. When the scheduling level indication indicates the first level, a first processing priority determined by the network side device is the highest. When the scheduling level indication indicates the second level, a second processing priority determined by the network side device is lower than the first processing priority. When the scheduling level indication indicates the third level, a third processing priority determined by the network side device is lower than the second processing priority. When the scheduling level indication indicates the fourth level, a fourth processing priority determined by the network side device is the lowest.

If the service auxiliary indication information is used to indicate the current play state of the terminal or the type of the service data packet, the network side device determines the processing priority of the service data packet based on the indicated current play state of the terminal or the indicated type of the service data packet.

Step 303: When receiving the service data packet of the terminal, the network side device schedules the service data packet based on the processing priority.

It should be noted that the service auxiliary indication information is merely reference information used by the network side device to determine the scheduling priority or the processing priority of the data packet. When determining the scheduling priority or the processing priority of the data packet, the network side device may further consider other information, for example, an algorithm of the network side device, a current available resource of the network side device, a priority of the terminal, and a priority of a service.

Correspondingly, the network side device receives the valid duration, or obtains valid duration that is agreed on by the network side device and the terminal in advance, and schedules, within the valid duration after the service auxiliary indication information is received, the service data packet of the terminal based on the processing priority.

In this embodiment of the present invention, the terminal sends the service auxiliary indication information to the network side device, and notifies, by using the service auxiliary indication information, the network side device of a processing requirement of the terminal for the service data packet of the terminal. In this case, the network side device may determine the processing priority of the service data packet based on the service auxiliary indication information, so as to meet a time requirement of a user for service data packet transmission.

An embodiment of the present invention provides a service data packet processing method. In the method, a first device sends service auxiliary indication information to a network side device. The service auxiliary indication information is used to indicate a processing requirement for a service data packet. The service data packet includes an uplink service data packet and/or a downlink service data packet. The uplink service data packet is a service data packet that is sent by a terminal to a server or a network side device, and the downlink service data is a service data packet that is sent by the server or the network side device to the terminal.

When receiving the service auxiliary indication information from the first device, the network side device may process the service data packet based on the service auxiliary indication information. Referring to FIG. 4, an example in which the first device is a server device and a processing operation performed on the service data packet is specifically a scheduling operation is used for description. A specific process of the method is as follows.

Step 401: A server sends service auxiliary indication information to a network side device, where the service auxiliary indication information is used to indicate a processing requirement for a service data packet.

In this embodiment, the service auxiliary indication information may be used to indicate a scheduling requirement for an uplink service data packet or a scheduling requirement for a downlink service data packet. Alternatively, the service auxiliary indication information may be uplink service auxiliary indication information, and the uplink service auxiliary indication information is used to indicate the scheduling requirement for the uplink service data packet. Alternatively, the service auxiliary indication information may be downlink service auxiliary indication information, and the downlink service auxiliary indication information is used to indicate the scheduling requirement for the downlink service data packet. The server is a device, such as a service provider or a local storage device, that provides a service data packet for a terminal.

Optionally, in this embodiment, the service auxiliary indication information may have the following forms.

In a first case, the service auxiliary indication information is scheduling indication information, and is used to instruct the network side device to quickly schedule the service data packet, or is used to instruct the network side device to decelerate scheduling of the service data packet.

For example, in this embodiment, the service auxiliary indication information may be one bit. A bit 1 is used to indicate that the scheduling of the service data packet of the server needs to be accelerated, and a bit 0 is used to indicate that the scheduling of the service data packet needs to be decelerated or does not need to be accelerated. Alternatively, a bit 0 is used to indicate that the scheduling of the service data packet needs to be accelerated, and a bit 1 is used to indicate that the scheduling of the service data packet needs to be decelerated or does not need to be accelerated. Alternatively, a bit 1 is used to indicate that the scheduling of the service data packet needs to be decelerated, and that no service auxiliary indication information is sent indicates that the scheduling of the service data packet does not need to be decelerated.

In a second case, the service auxiliary indication information is a scheduling level indication, and is used to indicate a scheduling level of the service data packet to the network side device.

Different scheduling levels represent scheduling priorities of service data packets. Preferably, the scheduling levels may be defined based on different requirements of different services or different service data packets for a delay.

It should be noted that the scheduling level may be obtained by performing sorting by the terminal based on services that are currently performed by the server, and reflect scheduling requirements of the server for different service data packets of the performed services; or the server and the terminal predefine different priorities corresponding to different services or different delay requirements or different data packet types, and the server obtains, based on the predefined priority and a currently performed service or a type of a sent service data packet, a priority that needs to be reported. For example, a scheduling level of a service data packet may specifically include four levels that are respectively a first level, a second level, a third level, and a fourth level.

The first level indicates that a requirement for a sending delay is the highest. For example, for a first video fragment packet, the server requires the network side device to preferably schedule the service data packet of the server after receiving the service data packet.

The second level indicates that a requirement for a sending delay is lower than that of the first level. For example, for a fragment packet in a video playback phase, the server requires the network side device to schedule the service data packet of the server within a first time after receiving the service data packet. The first time may be 5 ms, 10 ms, 15 ms, or the like. For example, when the first time is 10 ms, the second level indicates that the terminal requires the network side device to schedule the service data packet of the server within 10 ms after receiving the service data packet.

The third level indicates that a sending delay may be greater than that of the second level. For example, for a data packet downloaded in the background, the server requires the network side device to schedule the service data packet of the server within a preset second time after receiving the service data packet. The second time is greater than the preset first time. For example, the second time may be 30 ms, 50 ms, Is, or the like. For example, when the second time is Is, the third level indicates that the server requires the network side device to schedule the service data packet of the server within Is after receiving the service data packet.

The fourth level indicates that a sending delay may be greater than that of the third level. For example, for meter reading information, the server requires the network side device to determine by itself a time for scheduling a service data packet of the server.

In this embodiment, two bits may be used to represent each of the four levels, for example, a bit 11 is used to represent the first level, a bit 10 is used to represent the second level, a bit 01 is used to represent the third level, and a bit 00 is used to represent the fourth level.

In this step, the server may send service data to the network side device, and a packet header of the service data carries the service auxiliary indication information. For example, the service auxiliary indication information is carried in a reserved (reserved) bit or an option in a TCP packet header, or undefined domain in an IP packet header. Alternatively, the service auxiliary indication information is included in control information that is sent by the server to the network side device. The control information is corresponding to the service data packet.

In this embodiment, when service data is transmitted between the terminal and the server, the server needs to transmit the service data by using a transmission resource. The transmission resource may be a PRB (Physical Resource Block, physical resource block) or the like. Therefore, in this step, the server sends the service auxiliary indication information to the network side device by using the transmission resource used by the server.

Step 402: The network side device receives the service auxiliary indication information, and determines a processing priority of the service data packet based on the service auxiliary indication information.

In this embodiment, the network side device may be any device through which the service data transmitted between the terminal and the server, that is, the service data packet of the server, passes. For example, the network side device may be a base station, a RAN, or another terminal.

In this step, if the service auxiliary indication information is the scheduling indication information, the network side device determines the processing priority of the service data packet based on the scheduling indication information. For example, if the scheduling indication information is used to instruct the network side device to quickly schedule the service data packet, it is determined that the processing priority of the service data packet is relatively high. If the scheduling indication information is used to instruct the network side device to decelerate the scheduling of the service data packet, it is determined that the processing priority of the service data packet is relatively low.

If the service auxiliary indication information is the scheduling level indication, the network side device determines the processing priority of the service data packet based on the scheduling level indication. The scheduling level indication indicates the first level, the second level, the third level, or the fourth level. When the scheduling level indication indicates the first level, a first processing priority determined by the network side device is the highest. When the scheduling level indication indicates the second level, a second processing priority determined by the network side device is lower than the first processing priority. When the scheduling level indication indicates the third level, a third processing priority determined by the network side device is lower than the second processing priority. When the scheduling level indication indicates the fourth level, a fourth processing priority determined by the network side device is the lowest.

Step 403: When receiving service data of the server, the network side device schedules the service data packet based on the processing priority.

In this embodiment, a core network device may send the service auxiliary indication information to the network side device, and a specific implementation process is the same as that of the server. Details are not described herein. The core network device may be an MME (Mobility Management Entity, mobility management entity), a PGW, an SGW, a PCRF (Policy and Charging Rules Function, policy and charging rules function) unit, or the like.

In this embodiment of the present invention, the server sends the service auxiliary indication information to the network side device, and notifies, by using the service auxiliary indication information, the network side device of the processing requirement of the server for the service data packet of the server. In this case, the network side device may schedule the service data packet of the server based on the service auxiliary indication information, so as to meet a time requirement of a user for service data packet transmission.

In the present invention, the server and the terminal may further separately provide the service auxiliary indication information for the network side device. The service auxiliary indication information provided by the server may be different from the service auxiliary indication information provided by the terminal. The network side device determines, based on the service auxiliary indication information obtained from the server and the service auxiliary indication information obtained from the terminal, a processing priority of corresponding service data.

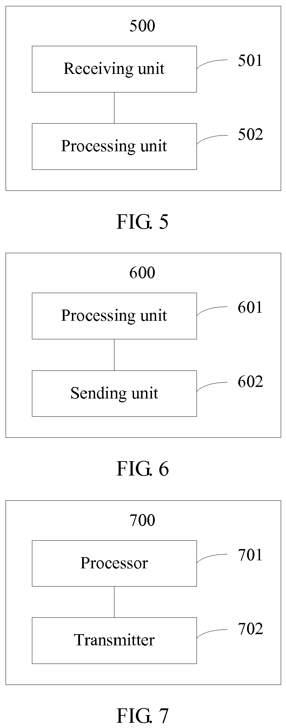

Referring to FIG. 5, an embodiment of the present invention provides a service data packet processing apparatus 500, and the apparatus 500 includes:
a receiving unit 501, configured to receive service auxiliary indication information from a first device, where the service auxiliary indication information is used to indicate a processing requirement of the first device for a service data packet, and the first device is at least one of a terminal, a server, or a routing node in a service data packet transmission process; and
a processing unit 502, configured to: determine a processing priority of the service data packet based on the service auxiliary indication information, and process the service data packet based on the processing priority.

Optionally, the service auxiliary indication information is scheduling indication information, and is used to instruct the apparatus 500 to quickly schedule the service data packet; or
the service auxiliary indication information is a scheduling level indication, and is used to indicate a scheduling priority of the service data packet to the apparatus 500; or
the service auxiliary indication information is a type of the service data packet; or
the service auxiliary indication information is a delay requirement of the service data packet, and is used to indicate a scheduling delay of the service data packet to the apparatus 500; or
the service auxiliary indication information is the processing priority of the service data packet, and is used to indicate the priority of processing the service data packet by the apparatus 500.

Optionally, the service auxiliary indication information includes uplink service auxiliary indication information and/or downlink service auxiliary indication information. The uplink service auxiliary indication information is used to indicate a processing requirement for an uplink service data packet, and the downlink service auxiliary indication information is used to indicate a processing requirement for a downlink service data packet.

Optionally, the receiving unit 501 is further configured to receive direction information from the first device. The direction information is used to indicate whether the service auxiliary indication information is uplink service auxiliary information or downlink service auxiliary information.

Optionally, the processing unit 502 is configured to: obtain valid duration, and determine, within the valid duration after the service auxiliary indication information is received, the processing priority of the service data packet based on the service auxiliary indication information.

Optionally, when the first device is the terminal, the receiving unit 501 is configured to: receive radio resource control (RRC) signaling from the terminal, where the RRC signaling carries the service auxiliary indication information; or receive an uplink service data packet from the terminal, where a packet header of the uplink service data packet carriers the service auxiliary indication information, or a control information element in a packet header of the uplink service data packet carriers the service auxiliary indication information; or receive the service auxiliary indication information that is from the terminal by using a preset transmission resource.

Optionally, when the first device is the server or the routing node in a data transmission process, the receiving unit 501 is configured to receive a service data packet from the server or the routing node. A packet header of the service data packet carriers the service auxiliary indication information.

In this embodiment of the present invention, the processing priority of the service data packet is determined based on the service auxiliary indication information of the first device, and service data is processed based on the processing priority, so that processing requirements for a service in different service transmission phases are met.

Referring to FIG. 6, an embodiment of the present invention provides a service data packet processing apparatus 600, and the apparatus includes:
a processing unit 601, configured to generate service auxiliary indication information based on service reference information of a first device, where the service auxiliary indication information is used to indicate a processing requirement of the first device for a service data packet, and the first device is at least one of a terminal, a server, or a routing node in a service data packet transmission process; and
a sending unit 602, configured to: send the service auxiliary indication information to a network side device, where the service auxiliary indication information is used by the network side device to determine a processing priority of the service data packet; and process the service data packet based on the processing priority.

Optionally, when the apparatus is the terminal,
the sending unit 602 is configured to: send radio resource control (RRC) signaling to the network side device, where the RRC signaling carries the service auxiliary indication information; or send an uplink service data packet to the network side device, where a packet header of the uplink service data packet carriers the service auxiliary indication information, or a control information element in a packet header of the uplink service data packet carriers the service auxiliary indication information; or send the service auxiliary indication information to the network side device by using a preset transmission resource.

Optionally, when the apparatus is the server or the routing node in a data transmission process,
the sending unit 602 is configured to send a service data packet to the network side device, where a packet header of the service data packet carriers the service auxiliary indication information.

Referring to FIG. 7, an embodiment of the present invention provides a service data packet processing apparatus 700, and the apparatus includes:
a processor 701, configured to generate service auxiliary indication information based on service reference information of a first device, where the service auxiliary indication information is used to indicate a processing requirement of the first device for a service data packet, and the first device is at least one of a terminal, a server, or a routing node in a service data packet transmission process; and
a transmitter 702, configured to: send the service auxiliary indication information to a network side device, where the service auxiliary indication information is used by the network side device to determine a processing priority of the service data packet; and process the service data packet based on the processing priority.

Optionally, when the first device is the terminal,
the transmitter 702 is configured to: send radio resource control (RRC) signaling to the network side device, where the RRC signaling carries the service auxiliary indication information; or send an uplink service data packet to the network side device, where a packet header of the uplink service data packet carriers the service auxiliary indication information, or a control information element in a packet header of the uplink service data packet carriers the service auxiliary indication information; or send the service auxiliary indication information to the network side device by using a preset transmission resource.

Optionally, when the first device is the server or the routing node in a data transmission process,
the transmitter 702 is configured to send a service data packet to the network side device, where a packet header of the service data packet carriers the service auxiliary indication information.

Optionally, the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

Optionally, the service auxiliary indication information includes uplink service auxiliary indication information and/or downlink service auxiliary indication information. The uplink service auxiliary indication information is used to indicate a processing requirement for an uplink service data packet, and the downlink service auxiliary indication information is used to indicate a processing requirement for a downlink service data packet.

Optionally, the sending unit is further configured to send direction information to the network side device. The direction information is used to indicate whether the service auxiliary indication information is uplink service auxiliary information or downlink service auxiliary information.

Persons of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely examples of embodiments of the present invention, but are not intended to limit the present invention. Any modification, equivalent replacement, and improvement made without departing from the spirit and principle of the present invention shall fall within the protection scope of the present invention.

## Claims

1. A service data packet processing method, wherein the method comprises:
receiving service auxiliary indication information from a first device, wherein the service auxiliary indication information is used to indicate a processing requirement of the first device for a service data packet, and the first device is at least one of a terminal, a server, or a routing node in a service data packet transmission process;
determining a processing priority of the service data packet based on the service auxiliary indication information; and
processing the service data packet based on the processing priority.

2. The method according to claim 1, wherein
the service auxiliary indication information is scheduling indication information, and is used to instruct a network side device to quickly schedule the service data packet; or
the service auxiliary indication information is a scheduling level indication, and is used to indicate a scheduling priority of the service data packet to a network side device; or
the service auxiliary indication information is a type of the service data packet; or
the service auxiliary indication information is a delay requirement of the service data packet, and is used to indicate a scheduling delay of the service data packet to a network side device; or
the service auxiliary indication information is the processing priority of the service data packet, and is used to indicate the priority of processing the service data packet by a network side device.

3. The method according to claim 1 or 2, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

4. The method according to claim 1 or 2, wherein the method further comprises:
receiving direction information from the first device, wherein the direction information is used to indicate whether the service auxiliary indication information is uplink service auxiliary information or downlink service auxiliary information.

5. The method according to any one of claims 1 to 4, wherein the method further comprises:
obtaining valid duration; and
the determining a processing priority of the service data packet based on the service auxiliary indication information comprises:
determining, within the valid duration after the service auxiliary indication information is received, the processing priority of the service data packet based on the service auxiliary indication information.

6. The method according to any one of claims 1 to 5, wherein when the first device is the terminal, the receiving the service auxiliary indication information from the first device comprises:
receiving radio resource control (RRC) signaling from the terminal, wherein the RRC signaling carries the service auxiliary indication information; or
receiving an uplink service data packet from the terminal, wherein a packet header of the uplink service data packet carriers the service auxiliary indication information, or a control information element in a packet header of the uplink service data packet carriers the service auxiliary indication information; or
receiving the service auxiliary indication information that is from the terminal by using a preset transmission resource.

7. The method according to any one of claims 1 to 5, wherein when the first device is the server or the routing node in a data transmission process, the receiving the service auxiliary indication information from the first device comprises:
receiving a service data packet from the server or the routing node, wherein a packet header of the service data packet carriers the service auxiliary indication information.

8. A service data packet processing apparatus, wherein the apparatus comprises:
a receiving unit, configured to receive service auxiliary indication information from a first device, wherein the service auxiliary indication information is used to indicate a processing requirement of the first device for a service data packet, and the first device is at least one of a terminal, a server, or a routing node in a service data packet transmission process; and
a processing unit, configured to: determine a processing priority of the service data packet based on the service auxiliary indication information, and process the service data packet based on the processing priority.

9. The apparatus according to claim 8, wherein
the service auxiliary indication information is scheduling indication information, and is used to instruct the apparatus to quickly schedule the service data packet; or
the service auxiliary indication information is a scheduling level indication, and is used to indicate a scheduling priority of the service data packet to the apparatus; or
the service auxiliary indication information is a type of the service data packet; or
the service auxiliary indication information is a delay requirement of the service data packet, and is used to indicate a scheduling delay of the service data packet to the apparatus; or
the service auxiliary indication information is the processing priority of the service data packet, and is used to indicate the priority of processing the service data packet by the apparatus.

10. The apparatus according to claim 8 or 9, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

11. The apparatus according to claim 8 or 9, wherein the receiving unit is further configured to receive direction information from the first device, wherein the direction information is used to indicate whether the service auxiliary indication information is uplink service auxiliary information or downlink service auxiliary information.

12. The apparatus according to any one of claims 8 to 11, wherein
the processing unit is configured to: obtain valid duration; and determine, within the valid duration after the service auxiliary indication information is received, the processing priority of the service data packet based on the service auxiliary indication information.

13. The apparatus according to any one of claims 8 to 12, wherein when the first device is the terminal,
the receiving unit is configured to: receive radio resource control (RRC) signaling from the terminal, wherein the RRC signaling carries the service auxiliary indication information; or receive an uplink service data packet from the terminal, wherein a packet header of the uplink service data packet carriers the service auxiliary indication information, or a control information element in a packet header of the uplink service data packet carriers the service auxiliary indication information; or receive the service auxiliary indication information that is from the terminal by using a preset transmission resource.

14. The apparatus according to any one of claims 8 to 13, wherein when the first device is the server or the routing node in a data transmission process, the receiving unit is configured to receive a service data packet from the server or the routing node, wherein a packet header of the service data packet carriers the service auxiliary indication information.

15. A service data packet processing apparatus, wherein the apparatus comprises:
a receiver, configured to receive service auxiliary indication information from a first device, wherein the service auxiliary indication information is used to indicate a processing requirement of the first device for a service data packet, and the first device is at least one of a terminal, a server, or a routing node in a service data packet transmission process; and
a processor, configured to: determine a processing priority of the service data packet based on the service auxiliary indication information, and process the service data packet based on the processing priority.

16. The apparatus according to claim 15, wherein
the service auxiliary indication information is scheduling indication information, and is used to instruct the apparatus to quickly schedule the service data packet; or
the service auxiliary indication information is a scheduling level indication, and is used to indicate a scheduling priority of the service data packet to the apparatus; or
the service auxiliary indication information is a type of the service data packet; or
the service auxiliary indication information is a delay requirement of the service data packet, and is used to indicate a scheduling delay of the service data packet to the apparatus; or
the service auxiliary indication information is the processing priority of the service data packet, and is used to indicate the priority of processing the service data packet by the apparatus.

17. The apparatus according to claim 15 or 16, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

18. The apparatus according to claim 15 or 16, wherein the receiver is further configured to receive direction information from the first device, wherein the direction information is used to indicate whether the service auxiliary indication information is uplink service auxiliary information or downlink service auxiliary information.

19. The apparatus according to any one of claims 15 to 18, wherein
the processor is configured to: obtain valid duration; and determine, within the valid duration after the service auxiliary indication information is received, the processing priority of the service data packet based on the service auxiliary indication information.

20. The apparatus according to any one of claims 15 to 19, wherein when the first device is the terminal,
the receiver is configured to: receive radio resource control (RRC) signaling from the terminal, wherein the RRC signaling carries the service auxiliary indication information; or receive an uplink service data packet from the terminal, wherein a packet header of the uplink service data packet carriers the service auxiliary indication information, or a control information element in a packet header of the uplink service data packet carriers the service auxiliary indication information; or receive the service auxiliary indication information from the terminal by using a preset transmission resource.

21. The apparatus according to any one of claims 15 to 20, wherein when the first device is the server or the routing node in a data transmission process, the receiver is configured to receive a service data packet from the server or the routing node, wherein a packet header of the service data packet carriers the service auxiliary indication information.

22. A service data packet processing method, wherein the method comprises:
generating service auxiliary indication information, wherein the service auxiliary indication information is used to indicate a processing requirement of the first device for a service data packet, and the first device is at least one of a terminal, a server, or a routing node in a service data packet transmission process; and
sending the service auxiliary indication information to a network side device, wherein the service auxiliary indication information is used by the network side device to determine a processing priority of the service data packet.

23. The method according to claim 22, wherein
the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

24. The method according to claim 22 or 23, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

25. The method according to claim 22, wherein the method further comprises:
sending direction information to the network side device, wherein the direction information is used to indicate whether the service auxiliary indication information is uplink service auxiliary information or downlink service auxiliary information.

26. The method according to claim 22, wherein when the first device is the terminal, the sending the service auxiliary indication information to the network side device comprises:
sending radio resource control (RRC) signaling to the network side device, wherein the RRC signaling carries the service auxiliary indication information; or
sending an uplink service data packet to the network side device, wherein a packet header of the uplink service data packet carriers the service auxiliary indication information, or a control information element in a packet header of the uplink service data packet carriers the service auxiliary indication information; or
sending the service auxiliary indication information to the network side device by using a preset transmission resource.

27. The method according to claim 22, wherein when the first device is the server or the routing node in a data transmission process, the sending the service auxiliary indication information to the network side device comprises:
sending a service data packet to the network side device, wherein a packet header of the service data packet carriers the service auxiliary indication information.

28. A service data packet processing apparatus, wherein the apparatus comprises:
a processing unit, configured to generate service auxiliary indication information, wherein the service auxiliary indication information is used to indicate a processing requirement of the first device for a service data packet, and the first device is at least one of a terminal, a server, or a routing node in a service data packet transmission process; and
a sending unit, configured to send the service auxiliary indication information to a network side device, wherein the service auxiliary indication information is used by the network side device to determine a processing priority of the service data packet.

29. The apparatus according to claim 28, wherein
the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

30. The apparatus according to claim 28 or 29, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

31. The apparatus according to claim 28, wherein the sending unit is further configured to send direction information to the network side device, wherein the direction information is used to indicate whether the service auxiliary indication information is uplink service auxiliary information or downlink service auxiliary information.

32. The apparatus according to claim 28, wherein when the apparatus is the terminal,
the sending unit is configured to: send radio resource control (RRC) signaling to the network side device, wherein the RRC signaling carries the service auxiliary indication information; or send an uplink service data packet to the network side device, wherein a packet header of the uplink service data packet carriers the service auxiliary indication information, or a control information element in a packet header of the uplink service data packet carriers the service auxiliary indication information; or send the service auxiliary indication information to the network side device by using a preset transmission resource.

33. The apparatus according to claim 28, wherein when the apparatus is the server or the routing node in a data transmission process,
the sending unit is configured to send a service data packet to the network side device, wherein a packet header of the service data packet carriers the service auxiliary indication information.

34. A service data packet processing apparatus, wherein the apparatus comprises:
a processor, configured to generate service auxiliary indication information, wherein the service auxiliary indication information is used to indicate a processing requirement of the first device for a service data packet, and the first device is at least one of a terminal, a server, or a routing node in a service data packet transmission process; and
a transmitter, configured to send the service auxiliary indication information to a network side device, wherein the service auxiliary indication information is used by the network side device to determine a processing priority of the service data packet.

35. The apparatus according to claim 34, wherein
the service auxiliary indication information is scheduling indication information, and is used to instruct the network side device to quickly schedule the service data packet; or
the service auxiliary indication information is a scheduling level indication, and is used to indicate a scheduling priority of the service data packet to the network side device; or
the service auxiliary indication information is a type of the service data packet; or
the service auxiliary indication information is a delay requirement of the service data packet, and is used to indicate a scheduling delay of the service data packet to the network side device; or
the service auxiliary indication information is the processing priority of the service data packet, and is used to indicate the priority of processing the service data packet by the network side device.

36. The apparatus according to claim 34 or 35, wherein the service auxiliary indication information comprises uplink service auxiliary indication information and/or downlink service auxiliary indication information, the uplink service auxiliary indication information is used to indicate a processing requirement for an uplink service data packet, and the downlink service auxiliary indication information is used to indicate a processing requirement for a downlink service data packet.

37. The apparatus according to claim 34, wherein the transmitter is further configured to send direction information to the network side device, wherein the direction information is used to indicate whether the service auxiliary indication information is uplink service auxiliary information or downlink service auxiliary information.

38. The apparatus according to claim 34, wherein when the first device is the terminal,
the transmitter is configured to: send radio resource control (RRC) signaling to the network side device, wherein the RRC signaling carries the service auxiliary indication information; or send an uplink service data packet to the network side device, wherein a packet header of the uplink service data packet carriers the service auxiliary indication information, or a control information element in a packet header of the uplink service data packet carriers the service auxiliary indication information; or send the service auxiliary indication information to the network side device by using a preset transmission resource.

39. The apparatus according to claim 34, wherein when the first device is the server or the routing node in a data transmission process,
the transmitter is configured to send a service data packet to the network side device, wherein a packet header of the service data packet carriers the service auxiliary indication information.
